# EUROPÄISCHE PATENTSCHRIFT

(11) **EP 0 818 488 B1**
(45) Veröffentlichungstag und Bekanntmachung des Hinweises auf die Patenterteilung: **21.03.2001**
(21) Anmeldenummer: 97110629.9
(22) Anmeldetag: 30.06.1997
(51) Int. Cl.: C08G 63/91, C08G 63/52, C09D 167/00

(54) **Acylbernsteinsäurepolyester, Verfahren zu ihrer Herstellung und ihre Verwendung für Duromere und Überzüge**
Acylsuccinic acid polyesters, process for their preparation and their utilization for duromers and coatings
Polyesters d'acide acylsuccinique, leur procédé de préparation et leur utilisation pour duromères et revêtements

(30) Priorität: 11.07.1996 DE 19627903
(43) Veröffentlichungstag der Anmeldung: 14.01.1998
(73) Patentinhaber: BAYER AG, 51368 Leverkusen (DE)
(72) Erfinder: Köhler, Burkhard, Dr., 51373 Leverkusen (DE); Meyer, Rolf-Volker, Dr., 51373 Leverkusen (DE)

(56) Entgegenhaltungen:
- GB-A- 1 011 838
- DATABASE WPI Week 8635 Derwent Publications Ltd., London, GB; AN 86-229940 XP002048971 & JP 61 161 243 A (NIPPON SHOKUBAI KAGAKU KOGYO CO LTD) , 21.Juli 1986

## Beschreibung

Die Erfindung betrifft neue Polyester von aliphatischen Acylbernsteinsäuren, ein Verfahren zu ihrer Herstellung durch polymeranaloge radikalische Addition von aliphatischen Aldehyden an (Co)polyester der Maleinsäure oder Fumarsäure (ungesättigte Polyester) und ihre Verwendung zur Herstellung von Duromeren.

Acylbernsteinsäure neigt zur Decarboxylierung, so daß eine direkte Veresterung zu Polyestern nicht möglich ist.

Es ist bekannt, daß man Maleinsäure- oder Fumarsäureester mit aliphatischen Aldehyden in Gegenwart von radikalischen Initiatoren zu monomeren Acylbernsteinsäureestern umsetzen kann (JOC 17 (1952) 100g ff). Während der Umsetzung findet in untergeordnetem Ausmaß eine Oligomerisierung statt. Daher war bei der entsprechenden Umsetzung von ungesättigten Polyestern eine Vernetzung zu erwarten.

Es wurde nun gefunden, daß sich durch Umsetzung von ungesättigten Polyestern mit aliphatischen Aldehyden in Gegenwart von radikalischen Initiatoren Acylbernsteinsäurepolyester herstellen lassen, die sich mit Polyisocyanaten vernetzen lassen, wobei organische, vernetzte Beschichtungen resultieren.

Gegenstand der Erfindung sind daher Acylbernsteinsäurepolyester, erhältlich durch Umsetzung eines Polyesters, erhältlich durch Umsetzung von Maleinsäure und/oder Maleinsäureestern und!oder Maleinsäureanhydrid und/oder Fumarsäure und/oder Fumarsäureestern und gegebenenfalls anderen Disäuren und/oder anderen Disäureestern und/oder anderen cyclischen Anhydriden und gegebenenfalls Monocarbonsäuren und/oder Monocarbonsäureestern und/oder Monocarbonsäureanhydriden mit Diolen und gegebenenfalls monofunktionellen Alkoholen, wobei das molare Verhältnis Diole zu Disäurederivaten 0,667 : 1 bis 1,5 : 1 beträgt und das molare Verhältnis Maleinsäure- + Fumarsäurederivate zu anderen Disäurederivaten größer als 0,15 : 1, vorzugsweise größer als 5 : 1 ist, und das molare Verhältnis monofunktionelle Verbindungen zu difunktionellen Verbindungen kleiner 0,4 : 1, vorzugsweise kleiner 0,1 : 1 ist, mit aliphatischen C₂-C₂₂-, vorzugsweise C₄-C₈-Aldehyden und/oder cycloaliphatischen C₆-C₂₀-, vorzugsweise C₆-C₇-Aldehyden, in Gegenwart von 0,2 bis 10 Gew.-% (bezogen auf die Menge an Polyester) radikalischen Initiatoren, bei 60 bis 160°C und Drücken von 1 bis 20 bar, in Gegenwart oder Abwesenheit von inerten Lösungsmitteln, wobei bezogen auf eine Maleinsäureester- oder Fumarsäureestereinheit 1 bis 50, vorzugsweise 3 bis 15 mol Aldehyde eingesetzt werden.

Die Isolierung der Produkte erfolgt durch Abdestillieren des Überschusses an Aldehyden oder gegebenenfalls vorhandenen inerten Lösungsmitteln bei Drücken von 0,0001 bis 1 bar.

Ein weiterer Gegenstand der Erfindung ist ein Verfahren zur Herstellung von Acylbernsteinsäurepolyester, dadurch gekennzeichnet, daß man Polyester, erhältlich durch Umsetzung von Maleinsäure und/oder Maleinsäureestern und/oder Maleinsäureanhydrid und/oder Fumarsäure und/oder Fumarsäureestern und gegebenenfalls anderen Disäuren und/oder anderen Disäureestern und/oder anderen cyclischen Anhydriden und gegebenenfalls Monocarbonsäuren und/oder Monocarbonsäureestern und/oder Monocarbonsäureanhydriden mit Diolen und gegebenenfalls monofunktionellen Alkoholen, wobei das molare Verhältnis Diole zu Disäurederivaten 0,667 : 1 bis 1,5 : 1 beträgt und das molare Verhältnis Maleinsäure- + Fumarsäurederivate zu anderen Disäurederivaten größer als 0,15 : 1, vorzugsweise größer als 5 : 1 ist, und das molare Verhältnis monofunktionelle Verbindungen zu difunktionellen Verbindungen kleiner 0,4 : 1, vorzugsweise kleiner 0,1 : 1 ist, mit
mit aliphatischen C₂-C₂₂-, vorzugsweise C₄-C₈-Aldehyden und/oder cycloaliphatischen C₆-C₂₀-, vorzugsweise C₆-C₇-Aldehyden, in Gegenwart von 0,2 bis 10 Gew.-% (bezogen auf die Menge an Polyester) radikalischen Initiatoren, bei 60 bis 160°C und Drücken von 1 bis 20 bar, in Gegenwart oder Abwesenheit von inerten Lösungsmitteln umsetzt, wobei bezogen auf eine Maleinsäureester- oder Fumarsäureestereinheit 1 bis 50, vorzugsweise 3 bis 15 mol Aldehyde eingesetzt werden und die Isolierung der Produkte durch Abdestillieren des Überschusses an Aldehyden oder gegebenenfalls vorhandenen inerten Lösungsmitteln bei Drücken von 0,001 bis 1 bar erfolgt.

Die Alkoholkomponente der erfindungsgemäß eingesetzten Maleinsäure- oder Fumarsäureester oder gegebenenfalls eingesetzten anderen Dicarbonsäureester oder Monocarbonsäureester sind vorzugsweise aliphatische C₁-C₆-Alkohole, besonders bevorzugt Methanol, Ethanol, Propanole oder Butanole.

Als erfindungsgemäß verwendete andere Dicarbonsäuren oder Dicarbonsäurederivate werden z.B. Phthalsäure, Isophthalsäure, Terephthalsäure, Tetrahydrophthalsäure, 1,2-, 1,3- oder 1,4-Cyclohexandicarbonsäure, Adipinsäure, Glutarsäure, Bernsteinsäure, Oxalsäure, Sebazinsäure, Azelainsäure, Dimerfettsäuren, hydrierte Dimerfettsäuren, deren Diester mit aliphatischen C₁-C₆-Alkoholen oder, falls vorhanden, innere Anhydride eingesetzt.

Als erfindungsgemäß verwendete Monocarbonsäuren oder Monocarbonsäurederivate können Benzoesäure, tert.-Butylbenzoesäure, Ölsäure, Linolsäure, Linolensäure, Stearinsäure, Palmitinsäure, Undecansäure, Undecensäure, 2-Ethylhexansäure, Capronsäure, Abietinsäure, hydrierte Abietinsäure, deren Ester mit aliphatischen C₁-C₆-Alkoholen oder Anhydride eingesetzt werden.

Als erfindungsgemäß verwendete Diole können Ethylenglykol, 1,2- oder 1,3-Propylenglycol, 1,2- oder 1,4-Butandiol, Neopentylglykol, Adipol, 1,4-Cyclohexandimethanol, 2,2-Bis(4-hydroxy-ethoxyphenyl)propan eingesetzt werden.

Als erfindungsgemäß verwendete monofunktionelle Alkohole können Hexanol, Cyclohexanol, Benzylalkohol, Trimethylolpropandiallylether, Glycerindiallylether, Stearylalkohol, Hydroxyethoxybenzol, Oleylalkohol, Undecanol, Undecenol eingesetzt werden.

Als aliphatische Aldehyde werden z.B. Acetaldehyd, Propionaldehyd, Butyraldehyd, Isobutyraldehyd, Hexanal, 2-Ethylhexanal, Undecanal und als cycloaliphatische Aldehyde Cyclohexylaldehyd oder Cyclopentylaldehyd eingesetzt.

Als radikalische Initiatoren werden erfindungsgemäß organische Peroxide oder Azoverbindungen eingesetzt, z.B. die in der Informationsschrift der Peroxid-Chemie GmbH A3.7.1 Organische Peroxide beschriebenen Verbindungen. Bevorzugt wird Benzoylperoxid eingesetzt.

Die zunächst erfolgende Veresterung kann gegebenenfalls in Gegenwart von üblichen Umesterungskatalysatoren, wie z.B. zinnorganischen Verbindungen oder Titanverbindungen, bei Temperaturen von 130 bis 240°C, gegebenenfalls in Gegenwart von Aceotropbildnern mit Wasser, wie z.B. Xylol, Mesitylen, Chlorbenzol, o-Dichlorbenzol durchgeführt werden, wobei vorzugsweise während der Veresterung mit Stickstoff inertisiert wird und gegebenenfalls 0,001 bis 0,5 Gew.-% (bezogen auf die Reaktionspartner) Inhibitoren, wie z.B. Hydrochinon(derivaten), sterisch gehinderten Phenolen oder Schwefel zugesetzt werden können.

Die anschließende Umsetzung der ungesättigten Polyester mit Aldehyden erfolgt vorzugsweise in Gegenwart von 0,5 bis 5 Gew.-% Benzoylperoxid bei 80 bis 90°C, wobei, wenn der Siedepunkt des Aldehyds über 80°C liegt, bei Normaldruck und falls der Siedepunkt des Aldehyds unter 80°C liegt unter Eigendruck plus gegebenenfalls einem Fremddruck von 2 bis 10 bar eines Inertgases, wie z.B. Stickstoff, gearbeitet wird, und die Umsetzung 10 bis 30 h dauert.

Ein weiterer Gegenstand der Erfindung ist die Verwendung der erfindungsgemäßen Acylbernsteinsäurepolyester zur Herstellung von Duromeren mit Di- oder Polyisocyanaten, dadurch gekennzeichnet, daß man die Lösung von Acylbernsteinsäurepolyestern in Gegenwart oder Abwesenheit von aprotischen Lösungsmitteln mit einer solchen Menge an Di- oder Polyisocyanaten umsetzt, daß auf ein Äquivalent Acylbernsteinsäureestereinheiten 0,5 bis 2, vorzugsweise 0,8 bis 1,2 Äquivalente Isocyanat eingesetzt wird.

Als erfindungsgemäß verwendete Di- oder Polyisocyanate können z.B. 1,6-Diisocyanatohexan, 1,3-Diisocyanato-4-methylcyclohexan, 1,3-Diisocyanato-2-methylcyclohexan, 1,6-Diisocyanato-3,3,5-trimethylhexan, 1,3- und 1,4-Xylylendiisocyanat, 1,3-Diisocyanatomethyl-4,6-dimethylbenzol, 1,3- und 1,4-Diisocyanatomethyl-α,α,α',α'-tetramethylbenzol, Bis(4-isocyanatocyclohexyl)methan, Bis(4-Isocyanato-3-methylcyclohexyl)methan, Bis(4-Isocyanato-3-ethylcyclohexyl)methan, Dimerfettdiisocyanat, 2,4- und 2,6-Toluylendiisocyanat, Bis(4-Isocyanatophenyl)methan, 1,3- und 1,4-Diisocyanatobenzol und deren Trimerisierungsprodukte über Isocyanurate, Biurete oder Urethane von Triolen, wie z.B. Trimethylolpropan.

Die Herstellung der Duromeren erfolgt vorzugsweise von 20 bis 140°C, vorzugsweise bei 50 bis 120°C.

Die Duromere werden bevorzugt als flächige Gebilde zur Beschichtung von Materialien eingesetzt. Die Lacke zeichnen sich durch eine gute Flexibilität und Lösungsmittelfestigkeit aus. Es können Metalle, Holz, Kunststoffe, Leder, Textilien oder Beton oder andere im Bau verwendeten Materialien beschichtet werden.

### Beispiele

### Beispiel 1 (Herstellung eines ungesättigten Polyesters)

Man erhitzt die Mischung aus 294 g Maleinsäureanhydrid (3 mol), 436 g Neopentylglykol (4 mol), 0,5 g Hydrochinon und 0,2 g Dibutylzinndilaurat unter Stickstoff 16 h auf 200°C, wobei Wasser abdestilliert.

### Beispiel 2 (radikalische Addition von Hexanal)

Man löst 50 g des ungesättigten Polyesters aus Beispiel 1 in 200 ml Hexanal, gibt 1 g Benzoylperoxid hinzu und erhitzt 20 h auf 85°C. Dann wird der überschüssige Aldehyd im Vakuum abgezogen. Man erhält 81 g eines Polyesters, der überwiegend aus Estereinheiten aus Hexanoylbernsteinsäure und Neopentylglykol besteht.

### Beispiel 3 (radikalische Addition von n-Butanal)

Man löst 500 g des ungesättigten Polyesters aus Beispiel 1 in 2 000 ml n-Butyraldehyd, gibt 10 g Benzoylperoxid hinzu und erhitzt im Autoklaven unter Eigendruck auf 85°C. Dann wird der überschüssige Aldehyd im Vakuum abgezogen. Man erhält 672 g eines Polyesters, der überwiegend aus Estereinheiten aus Butanoylbernsteinsäure und Neopentylglykol besteht.

### Beispiel 4

Man löst 3 g des Acylbernsteinsäurepolyesters aus Beispiel 2 in 3 ml Toluol, gibt 2 g Desmodur N 3300 (Trisisocyanatohexylisocyanurat) hinzu, zieht einen 100 µ-Film auf eine Glasplatte auf und brennt 30 min bei 120°C ein. Man erhält einen acetonfesten Film.

## Patentansprüche

1. Acylbernsteinsäurepolyester, erhältlich durch Umsetzung eines Polyesters, erhältlich durch Umsetzung von Maleinsäure und/oder Maleinsäureestern und/oder Maleinsäureanhydrid und/oder Fumarsäure und/oder Fumarsäureestern und gegebenenfalls anderen Disäuren und/oder anderen Disäureestern und/oder anderen cyclischen Anhydriden und gegebenenfalls Monocarbonsäuren und/oder Monocarbonsäureestern und/oder Monocarbonsäureanhydriden mit Diolen und gegebenenfalls monofunktionellen Alkoholen, wobei das molare Verhältnis Diole zu Disäurederivaten 0,667 : 1 bis 1,5 : 1 beträgt und das molare Verhältnis Maleinsäure- + Fumarsäurederivate zu anderen Disäurederivaten größer als 0,15 : 1 und das molare Verhältnis monofunktionelle Verbindungen zu difunktionellen Verbindungen kleiner 0,4 : 1 ist,
mit aliphatischen C₂-C₂₂-Aldehyden und/oder cycloaliphatischen C₆-C₂₀-Aldehyden, in Gegenwart von 0,2 bis 10 Gew.-% (bezogen auf die Menge an Polyester) radikalischen Initiatoren, bei 60 bis 160°C und Drücken von 1 bis 20 bar, in Gegenwart oder Abwesenheit von inerten Lösungsmitteln, wobei bezogen auf eine Maleinsäureester- oder Fumarsäureestereinheit 1 bis 50 mol Aldehyde eingesetzt werden.

2. Verfahren zur Herstellung von Acylbernsteinsäurepolyester nach Anspruch 1, dadurch gekennzeichnet, daß man Polyester, erhältlich durch Umsetzung von Maleinsäure und/oder Maleinsäureestern und/oder Maleinsäureanhydrid und/oder Fumarsäure und/oder Fumarsäureestern und gegebenenfalls anderen Disäuren und/oder anderen Disäureestern und/oder anderen cyclischen Anhydriden und gegebenenfalls Monocarbonsäuren und/oder Monocarbonsäureestern und/oder Monocarbonsäureanhydriden mit Diolen und gegebenenfalls monofunktionellen Alkoholen, wobei das molare Verhältnis Diole zu Disäurederivaten 0,667 : 1 bis 1,5 : 1 beträgt und das molare Verhältnis Maleinsäure- + Fumarsäurederivate zu anderen Disäurederivaten größer als 0,15 : 1 ist, und das molare Verhältnis monofunktionelle Verbindungen zu difunktionellen Verbindungen kleiner 0,4 : 1 ist,
mit aliphatischen C₂-C₂₂-Aldehyden und/oder cycloaliphatischen C₆-C₂₀-Aldehyden, in Gegenwart von 0,2 bis 10 Gew.-% (bezogen auf die Menge an Polyester) radikalischen Initiatoren, bei 60 bis 160°C und Drücken von 1 bis 20 bar, in Gegenwart oder Abwesenheit von inerten Lösungsmitteln umsetzt, wobei bezogen auf eine Maleinsäureester- oder Fumarsäureestereinheit 1 bis 50 mol Aldehyde eingesetzt werden und die Isolierung der Produkte durch Abdestillieren des Überschusses an Aldehyden oder gegebenenfalls vorhandenen inerten Lösungsmitteln bei Drücken von 0,001 bis 1 bar erfolgt.

3. Verwendung der Acylbernsteinsäurepolyester nach Anspruch 1 zur Herstellung von Duromeren mit Di- oder Polyisocyanaten, dadurch gekennzeichnet, daß man die Lösung von Acylbernsteinsäurepolyestern in Gegenwart oder Abwesenheit von aprotischen Lösungsmitteln mit einer solchen Menge an Di- oder Polyisocyanaten umsetzt, daß auf ein Äquivalent Acylbernsteinsäureestereinheiten 0,5 bis 2 Äquivalente Isocyanat eingesetzt wird.

4. Verwendung der Acylbernsteinsäurepolyester gemäß Anspruch 1 zur Herstellung von Überzügen.

## Claims

1. Acylsuccinic acid polyesters obtainable by the reaction of a polyester, which is obtainable by the reaction of maleic acid and/or maleic acid esters and/or maleic anhydride and/or fumaric acid and/or fumaric acid esters and optionally other diacids and/or other diacid esters and/or other cyclic anhydrides and optionally monocarboxylic acids and/or monocarboxylic acid esters and/or monocarboxylic anhydrides with diols and optionally with monofunctional alcohols, wherein the molar ratio of diols to diacid derivatives is 0.667 : 1 to 1.5 : 1, and the molar ratio of maleic acid derivatives + fumaric acid derivatives to other diacid derivatives is greater than 0.15 : 1, and the molar ratio of monofunctional compounds to difunctional compounds is less than 0.4 : 1,
with aliphatic C₂-C₂₂ aldehydes and/or cycloaliphatic C₆-C₂₀ aldehydes, in the presence of 0.2 to 10 % by weight (with respect to the amount of polyester) of radical initiators, at 60 to 160°C and at pressures of 1 to 20 bar, in the presence or absence of inert solvents, wherein 1 to 50 mol of aldehydes are used with respect to one maleic acid ester or fumaric acid ester unit.

2. A process for producing acylsuccinic acid polyesters according to claim 1, characterised in that polyesters obtainable by the reaction of maleic acid and/or maleic acid esters and/or maleic anhydride and/or fumaric acid and/or fumaric acid esters and optionally other diacids and/or other diacid esters and/or other cyclic anhydrides and optionally monocarboxylic acids and/or monocarboxylic acid esters and/or monocarboxylic anhydrides with diols and optionally with monofunctional alcohols, wherein the molar ratio of diols to diacid derivatives is 0.667 : 1 to 1.5 : 1, and the molar ratio of maleic acid derivatives + fumaric acid derivatives to other diacid derivatives is greater than 0.15 : 1, and the molar ratio of monofunctional compounds to difunctional compounds is less than 0.4 : 1, are reacted with
aliphatic C₂-C₂₂ aldehydes and/or cycloaliphatic C₆-C₂₀ aldehydes, in the presence of 0.2 to 10 % by weight (with respect to the amount of polyester) of radical initiators, at 60 to 160°C and at pressures of 1 to 20 bar, in the presence or absence of inert solvents, wherein 1 to 50 mol of aldehyde are used with respect to one maleic acid ester or fumaric acid ester unit and the products are isolated by distilling off the excess aldehydes, or the solvents which are optionally present, at pressures of 0.001 to 1 bar.

3. The use of the acylsuccinic acid polyesters according to claim 1 for the production of thermosetting plastics with di- or polyisocyanates, characterised in that the solution of acylsuccinic acid polyesters is reacted in the presence or absence of aprotic solvents with an amount of di- or polyisocyanates such that 0.5 to 2 equivalents of isocyanate are used for each equivalent of acylsuccinic acid ester units.

4. The use of the acylsuccinic acid polyesters according to claim 1 for the production of coatings.

## Revendications

1. Polyesters acylsucciniques obtenus par réaction d'un polyester lui-même obtenu par réaction de l'acide maléique et/ou d'esters maléiques et/ou de l'anhydride maléique et/ou de l'acide fumarique et/ou d'esters fumariques et, le cas échéant, d'autres diacides et/ou d'autres esters de diacides et/ou d'autres anhydrides cycliques et, le cas échéant, d'acides monocarboxyliques et/ou d'esters d'acides monocarboxyliques et/ou d'anhydrides d'acides monocarboxyliques avec des diols et, le cas échéant, des alcools monofonctionnels, à un rapport molaire diols/dérivés de diacides de 0,667:1 à 1,5:1, un rapport molaire dérivés de l'acide maléique + dérivés de l'acide fumarique/autres dérivés de diacides supérieur à 0,15:1 et un rapport molaire composés monofonctionnels/composés difonctionnels inférieur à 0,4:1,
avec des aldéhydes alphatiques en C₂ -C₂₂ et/ou des aldéhydes cycloaliphatiques en C₆-C₂₀ en présence de 0,2 à 10% en poids (par rapport à la quantité de polyesters) d'inducteurs radicalaires, à des températures de 60 à 160°C et des pressions de 1 à 20 bar, en présence ou en l'absence de solvants inertes, les aldéhydes étant mis en oeuvre en quantité de 1 à 50 mol par motifs d'ester maléique ou fumarique.

2. Procédé de préparation des polyesters acylsucciniques selon la revendication 1, caractérisé en ce que l'on fait réagir des polyesters eux-mêmes obtenus par réaction de l'acide maléique et/ou d'esters maléiques et/ou de l'anhydride maléique et/ou de l'acide fumarique et/ou d'esters fumariques et, le cas échéant, d'autres diacides et/ou d'autres esters de diacides et/ou d'autres anhydrides cycliques et, le cas échéant d'acides monocarboxyliques et/ou d'esters d'acides monocarboxyliques et/ou d'anhydrides d'acides monocarboxyliques avec des diols et, le cas échéant, des alcools monofonctionnels, à un rapport molaire diols/dérivés de diacides de 0,667:1 à 1,5:1, un rapport molaire dérivés de l'acide maléique + dérivés de l'acide fumarique/autres dérivés de diacide supérieur à 0,15:1 et un rapport molaire composés monofonctionnels/composés difonctionnels inférieur à 0,4:1,
avec des aldéhydes alphatiques en C₂-C₂₂ et/ou des aldéhydes cycloaliphatiques en C₆-C₂₀, en présence de 0,2 à 10 % en poids (par rapport à la quantité de polyesters) d'inducteurs radicalaires, à des températures de 60 à 160°C et des pressions de 1 à 20 bar, en présence ou en l'absence de solvants inertes, les aldéhydes étant mis en oeuvre en quantité de 1 à 50 mol par motifs d'ester maléique ou fumarique et les produits étant isolés par distillation de l'excès d'aldéhyde ou, le cas échéant, des solvants inertes éventuels sous des pressions de 0,001 à 1 bar.

3. Utilisation des polyesters acylsuccinique selon la revendication 1 pour la préparation de matières thermodurcissables par réaction avec des di- ou poly-isocyanates, caractérisée en ce que l'on fait réagir la solution des polyesters acylsucciniques en présence ou en l'absence de solvants aprotoniques avec des di- ou poly-isocyanates en quantités correspondant à 0,5 à 2 équivalents d'isocyanate par équivalent de motif d'ester acylsuccinique.

4. Utilisation des polyesters acylsucciniques selon la revendication 1, pour l'application de revêtements.
